# EUROPEAN PATENT SPECIFICATION

(11) **EP 2 849 389 B1**
(45) Date of publication and mention of the grant of the patent: **22.02.2017**
(21) Application number: 12761437.8
(22) Date of filing: 25.05.2012
(51) Int. Cl.: H04L 12/911, H04L 12/24

(54) **METHOD AND APPARATUS FOR ALLOCATING BANDWIDTH RESOURCES**
VERFAHREN UND VORRICHTUNG ZUR ZUWEISUNG VON BANDBREITENRESSOURCEN
PROCÉDÉ ET APPAREIL POUR ATTRIBUER DES RESSOURCES DE LARGEUR DE BANDE

(43) Date of publication of application: 18.03.2015
(73) Proprietor: Huawei Technologies Co., Ltd., Longgang District Shenzhen, Guangdong 518129 (CN)
(72) Inventor: HAN, Jianrui, Shenzhen Guangdong 518129 (CN); LIU, Ning, Shenzhen Guangdong 518129 (CN); QIU, Yang, Shenzhen, Guangdong 518129 (CN)
(74) Representative: Pfenning, Meinig & Partner mbB
(86) International application number: PCT/CN2012/076111
(87) International publication number: WO 2012/126435

(56) References cited:
- WO-A1-2005/006678
- CN-A- 1 781 287
- CN-A- 102 083 208
- CN-A- 102 438 319
- US-A1- 2012 002 566

## Description

### TECHNICAL FIELD

The present invention relates to the communications field, and in particular, to a method and an apparatus for allocating a bandwidth resource.

### BACKGROUND

In recent years, a wavelength division technology (Wavelength Division Multiplexing, WDM) is widely applied to various levels of transmission networks, which makes a network topology structure evolve from a simple structure, such a ring or tree structure, to a more complex network structure. Moreover, with the rapid development of IP networks, and mass application of new services, such as bandwidth, Internet Protocol television (Internet Protocol television, IPTV), next generation network (Next generation network, NGN), and 3G, a service type of a network also transitions from a circuit switched service that is mainly a time division multiplexing (Time division multiplexing, TDM) service, to a data service that is mainly an IP service. Rapid growth of data services and more complex network structures require more intelligent functions to be provided to the network, so that rapid response is enabled when a network topology and service distribution change, thereby implementing flexible scheduling of services and effective management over bandwidth.

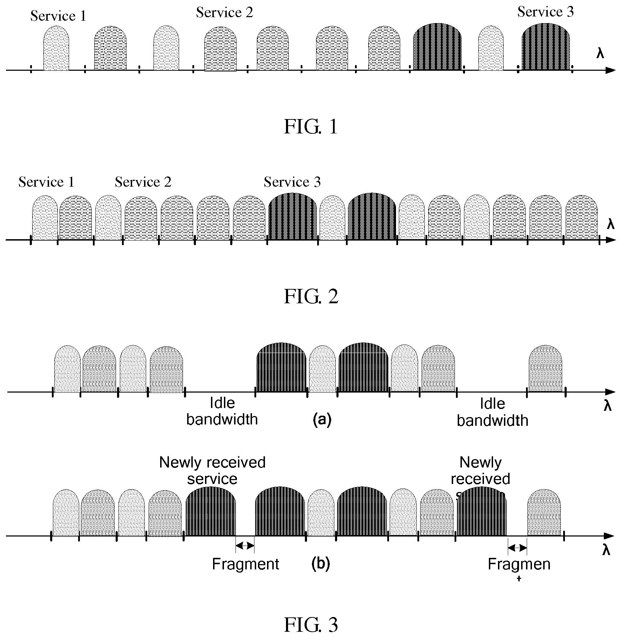

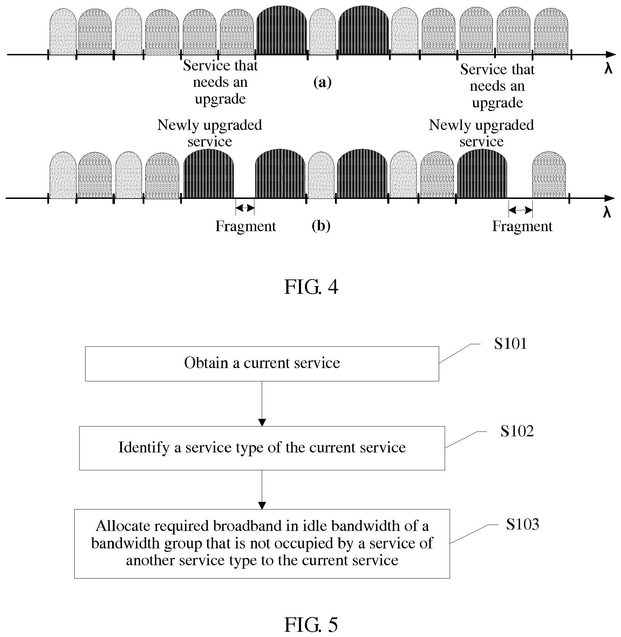

A dense wavelength division multiplexing (Dense Wavelength Division Multiplexing, DWDM) network based on a conventional wavelength division technology requires identical bandwidth to be allocated for each data service. This method for allocating bandwidth causes a waste of bandwidth resources because excess bandwidth is allocated when a baud rate of service data is low; in addition, when the baud rate of the service data is high (for example, for a high-bandwidth service such as a 400G service and a future 1T service), a service failure may be caused because insufficient bandwidth is allocated, which increases a blocking rate of the network. To increase a utilization rate of network bandwidth and reduce a blocking rate of a network, a flexible bandwidth optical network (Flexible bandwidth optical network, FBON) is proposed in the industry. This type of network may allocate a required bandwidth resource to service data according to a baud rate of the service data itself, thereby improving the utilization rate of network bandwidth resources and reducing the blocking rate of the network. FIG. 1 shows bandwidth allocation in a conventional DWDM network, and FIG. 2 shows bandwidth allocation in an FBON network, where both FIG. 1 and FIG. 2 include three different service types. Because the bandwidth allocation in the FBON is allocation performed according to bandwidth actually required by the service data instead of allocation of a fixed grid in a conventional DWDM network system, a waste of bandwidth is avoided as much as possible, thereby improving the utilization rate of bandwidth resources. However, a bandwidth fragment that cannot be used can be formed in a bandwidth allocation process of the FBON. This bandwidth fragment cannot be allocated to any one type of service for use mainly because remaining bandwidth after bandwidth allocation is smaller than bandwidth required by a minimum bandwidth required by a service. FIG. 3 demonstrates generation of a bandwidth fragment in a new service allocation process of an FBON network. When idle bandwidth meets a bandwidth requirement of a newly received service, the idle bandwidth is allocated to the newly received service; however, in this case, remaining bandwidth is smaller than a requirement of minimum service bandwidth and therefore cannot be used by a subsequent service, so as to form a bandwidth fragment. A similar case also occurs in a process of service upgrade, as shown by a and b of FIG. 4. In this case, a bandwidth fragment is formed mainly because remaining bandwidth after service upgrade cannot be used by any one type of new service. In an FBON network system, besides a problem of the bandwidth fragment may be caused, a mutual crosstalk effect may also be caused in a process of mixed transmission of services of a plurality of service types, which eventually affects transmission performance of the services.

WO 2005006678 A1 discloses a method for allocating network resources in a flexible manner. In the method, a first customer's unused resources are assigned to a second customer, e.g., in exchange for a relatively lower service charge to the first customer. The unused bandwidth may be assigned on a hierarchical or a non-hierarchical basis. In the method, resources are allocated using a token bucket methodology.

CN 102083208 A discloses a resource allocation method. The method comprises the following steps of: acquiring a semi-persistent scheduling (SPS) service to be accessed into a system and a lowest common multiple of the service periods of all SPS services accessed into the system; checking a resource at corresponding time points of the system within the time range of the lowest common multiple by using the service period of the SPS service to be accessed into the system as a time interval so as to judge whether the resource of the system at the corresponding time points meet the resource allocation requirement of the SPS service to be accessed into the system or not;; and allocating the resource to the SPS service to be accessed into the system under the condition that the resource is determined to meet the resource allocation requirement of the SPS service to be accessed into the system at all corresponding time points within the time range in the resource judging step. The resource allocation method and device provided by the invention can be used for resource allocation and reservation for the SPS service newly appearing in HSPA+ (High Speed Packet Access Evolution).

CN 102438319 A1 discloses an uplink control channel resource distribution method. The method comprises the following steps of: establishing a physical uplink control channel (PUCCH) resource table corresponding to uplink control information, wherein a time domain index of a PUCCH resource is set to be the minimum common multiples of various PUCCH repeated cycles supported by the PUCCH resource for transmitting the corresponding uplink control information; and during distribution of the PUCCH resource, finding out an available resource according to the resource table and the PUCCH repeated cycle of a current terminal, finding out an available resource within a range according to the resource table and a smaller PUCCH repeated cycle, and distributing the PUCCH resource to the current terminal according to the search results. Therefore, when the PUCCH resource is distributed to the terminal, the PUCCH repeated cycle of the terminal is considered, and the smaller PUCCH repeated cycle is also considered; under the condition that the uplink control channel resources in different cycles coexist, the transmission requirement of the current terminal can be met and the utilization rate of the uplink control channel resources is increased; and meanwhile, the resources can be selected according to the resource table designed by the embodiment of the invention, so the technology implementation is simplified.

US 2012/002566 A1 discloses a communication apparatus that can accurately measure the available bandwidth of a communication path between itself and another communication apparatus by performing measurement communication in accordance with an execution frequency. The communication apparatuses can select the optimum communication method in accordance with the identified available bandwidth, so that each of the communication apparatuses can reliably perform communication with a counterpart apparatus. The execution frequency is identified in accordance with the communication stability so that an appropriate execution frequency can be identified for each bidirectional communication path. In this way, communication apparatuses can accurately measure the available bandwidth by performing measurement communication with the optimum execution frequency.

### SUMMARY

Embodiments of the present invention provide a method for allocating a bandwidth resource, which can reduce mutual interference in a process of transmitting services of a plurality of service types, and support a bandwidth allocation manner in an FBON, and can prevent a bandwidth fragment from being generated in a process of allocating bandwidth to a service.

To solve the foregoing technical problem, the embodiments of the present invention provide a method for allocating a bandwidth resource, which includes:
obtaining a current service;
identifying a service type of the current service; and
allocating required bandwidth in idle bandwidth of a bandwidth group that is not occupied by a service of another service type to the current service, where the another service type refers to a service type that is different from the service type of the current service, each bandwidth group is allocated to only services of a same service type, the bandwidth resource includes N bandwidth groups with same bandwidth in frequency, and the bandwidth of the bandwidth group is the least common multiple of bandwidth required by service types that need to be processed.

Correspondingly, the embodiments of the present invention further provide an apparatus for allocating a bandwidth resource, which includes a first obtaining unit, an identifying unit, and an allocating unit, where
the first obtaining unit is configured to obtain a current service;
the identifying unit is configured to identify a service type of the current service obtained by the first obtaining unit; and
the allocating unit is configured to allocate required bandwidth in idle bandwidth of a bandwidth group that is not occupied by a service of another service type to the current service, where the another service type refers to a service type that is different from the service type of the current service, each bandwidth group is allocated to only services of a same service type, the bandwidth resource includes N bandwidth groups with same bandwidth in frequency, and the bandwidth of the bandwidth group is the least common multiple of bandwidth required by service types that need to be processed.

According to the embodiments of the present invention, a bandwidth resource includes N bandwidth groups with same bandwidth, and the bandwidth of the bandwidth group is the least common multiple of bandwidth required by service types that need to be processed; required bandwidth in idle bandwidth of a bandwidth group that is not occupied by a service of another service type is allocated to a current service, where the another service type refers to a service type that is different from a service type of the current service, and each bandwidth group is allocated to only services of a same service type, in this case, mutual interference can be reduced in a process of transmitting services of a plurality of service types; moreover, the required bandwidth in the idle bandwidth is allocated to the current service, and in this case, on-demand allocation of the bandwidth resource can be implemented, so as to support a bandwidth allocation manner in an FBON, and can prevent a bandwidth fragment from being generated in a process of allocating bandwidth to a service.

### BRIEF DESCRIPTION OF DRAWINGS

To describe the technical solutions in the embodiments of the present invention or in the prior art more clearly, the following briefly introduces the accompanying drawings required for describing the embodiments or the prior art.

Apparently, the accompanying drawings in the following description show merely some embodiments of the present invention, and a person of ordinary skill in the art may still derive other drawings from these accompanying drawings without creative efforts.
FIG. 1 is a schematic diagram of allocating bandwidth in a conventional DWDM network;
FIG. 2 is a schematic diagram of allocating bandwidth in an FBON network;
FIG. 3 is a schematic diagram of generating a bandwidth fragment in a new service allocation process of an FBON network;
FIG. 4 is a schematic diagram showing that a bandwidth fragment generated in a new service allocation process of an FBON network cannot be used after service upgrade;
FIG. 5 is a schematic flow diagram of a first embodiment of a method for allocating a bandwidth resource according to an embodiment of the present invention;
FIG. 6 is a schematic flow diagram of a second embodiment of a method for allocating a bandwidth resource according to an embodiment of the present invention;
FIG. 7 is a schematic diagram of a process of allocating a bandwidth resource according to an embodiment of the present invention;
FIG. 8 is a schematic flow diagram of a third embodiment of a method for allocating a bandwidth resource according to an embodiment of the present invention;
FIG. 9 is a schematic diagram of another process of allocating a bandwidth resource according to an embodiment of the present invention;
FIG. 10 is a schematic structural diagram of a first embodiment of an apparatus for allocating a bandwidth resource according to an embodiment of the present invention;
FIG. 11 is a schematic structural diagram of another implementation manner of the first embodiment of an apparatus for allocating a bandwidth resource according to an embodiment of the present invention;
FIG. 12 is a schematic structural diagram of a second embodiment of a method for allocating a bandwidth resource according to an embodiment of the present invention; and
FIG. 13 is a schematic flow diagram of a third embodiment of a method for allocating a bandwidth resource according to an embodiment of the present invention.

### DESCRIPTION OF EMBODIMENTS

The following clearly and completely describes the technical solutions in the embodiments of the present invention with reference to the accompanying drawings in the embodiments of the present invention. Apparently, the described embodiments are merely a part rather than all of the embodiments of the present invention. All other embodiments obtained by a person of ordinary skill in the art based on the embodiments of the present invention without creative efforts shall fall within the protection scope of the present invention.

FIG. 5 is a schematic flow diagram of a first embodiment of a method for allocating a bandwidth resource according to an embodiment of the present invention. As shown in FIG. 5, the method includes:
S101. Obtain a current service.

The current service is a service that currently requires allocation of bandwidth.

S102. Identify a service type of the current service.

S103. Allocate required bandwidth in idle bandwidth of a bandwidth group that is not occupied by a service of another service type to the current service, where the another service type refers to a service type that is different from the service type of the current service, each bandwidth group is allocated to only services of a same service type, the bandwidth resource includes N bandwidth groups with same bandwidth, and the bandwidth of the bandwidth group is the least common multiple of bandwidth required by service types that need to be processed.

The required bandwidth in the idle bandwidth of the bandwidth group that is not occupied by the service of the another service type is allocated to the current service; because the required bandwidth in the idle bandwidth is allocated to the current service, on-demand allocation can be implemented, so as to support a bandwidth allocation manner in an FBON. Moreover, allocating each bandwidth group to only services of a same service type is adopted in an allocation process. For example, a bandwidth group 1 corresponds to services of a service type A, a bandwidth group 2 corresponds to services of a service type B, and a bandwidth group 3 corresponds to services of a service type D. Certainly, service types corresponding to several bandwidth groups may also be the same. For example, a bandwidth group 1 corresponds to services of a service type A, and a bandwidth group 4 also corresponds to the services of the service type A. In this case, that each bandwidth group is allocated to only one service type is ensured, and mutual interference in a process of transmitting services of a plurality of service types can be reduced.

It should be noted that in this embodiment, the bandwidth group that is not occupied by the service of the another service type may specifically be a bandwidth group of which certain bandwidth is occupied by a service of the same service type as the current service, and may also be an unoccupied bandwidth group.

As an optional implementation manner, the allocating required bandwidth in idle bandwidth of a bandwidth group that is not occupied by a service of another service type to the current service in step S103 may include:
allocating required bandwidth in idle bandwidth of the bandwidth group of which certain bandwidth is occupied by the service of the same service type as the current service to the current service, or allocating required bandwidth in one unoccupied bandwidth group to the current service.

It should be noted that the bandwidth resource includes N bandwidth groups with same bandwidth, and the bandwidth of the bandwidth group is bandwidth of the least common multiple of the bandwidth required by the service types that need to be processed. In this case, that bandwidth of each bandwidth group is an integer multiple of bandwidth required by a service of any one service type among service types that need to be processed can be ensured, so that no bandwidth fragment occurs in a bandwidth allocation process. As long as idle bandwidth exists in a bandwidth group, the idle bandwidth definitely can be used by a service of a service type to which the bandwidth group is allocated. It is assumed that the service types that need to be processed include a service type A, a service type B, a service type C, and a service type D, where bandwidth required by the service type A is 10 GHz, bandwidth required by the service type B is 20 GHz, bandwidth required by the service type C is 30 GHz, and bandwidth required by the service type D is 40 GHz, the least common multiple of bandwidth required by the service types that need to be processed is 120 GHz. In this case, bandwidth of each bandwidth group is 120 GHz; because the bandwidth of each bandwidth group is allocated to only services of a same service type, it is impossible for a bandwidth fragment to occur in an allocation process.

As an optional implementation manner, before step S101, the method may further include:
obtaining the bandwidth required by the service types that need to be processed;
calculating the least common multiple of the bandwidth required by the service types that need to be processed; and
grouping the bandwidth resource according to the least common multiple to obtain the N bandwidth groups with same bandwidth, where the bandwidth of the bandwidth group is bandwidth of the least common multiple.

It is assumed that the service types that need to be processed include a service type A, a service type B, a service type C, a service type D, and a service type E, where bandwidth required by the service type A is 10 GHz, bandwidth required by the service type B is 20 GHz, bandwidth required by the service type C is 30 GHz, bandwidth required by the service type D is 40 GHz, and bandwidth required by the service type E is 120 GHz. A calculated least common multiple is 120 GHz; then, the bandwidth resource is grouped into N bandwidth groups with bandwidth of 120 GHz.

Certainly, for the grouping the bandwidth resource according to the least common multiple to obtain the N bandwidth groups with same bandwidth, the bandwidth of the bandwidth group may also be an integer multiple of the bandwidth of the least common multiple. If the least common multiple for service types that need to be processed is 120 GHz, the bandwidth resource may be grouped into N bandwidth groups with bandwidth of 120 GHz, 240 GHz, or 360 GHz. Bandwidth of each bandwidth group that is grouped in this way is also an integer multiple of bandwidth required by any one service type among the service types that need to be processed, so that no bandwidth fragment occurs in a bandwidth allocation process either.

According to this embodiment, a bandwidth resource includes N bandwidth groups with same bandwidth, and the bandwidth of the bandwidth group is the least common multiple of bandwidth required by service types that need to be processed; required bandwidth in idle bandwidth of a bandwidth group that is not occupied by a service of another service type is allocated to a current service, where the another service type refers to a service type that is different from a service type of the current service, and each bandwidth group is allocated to only services of a same service type; in this case, mutual interference in a process of transmitting services of a plurality of service types can be reduced; moreover, the required bandwidth in the idle bandwidth is allocated to the current service, and in this case, on-demand allocation of the bandwidth resource can be implemented, so as to support a bandwidth allocation manner in an FBON, and can prevent a bandwidth fragment from being generated in a process of allocating bandwidth to a service.

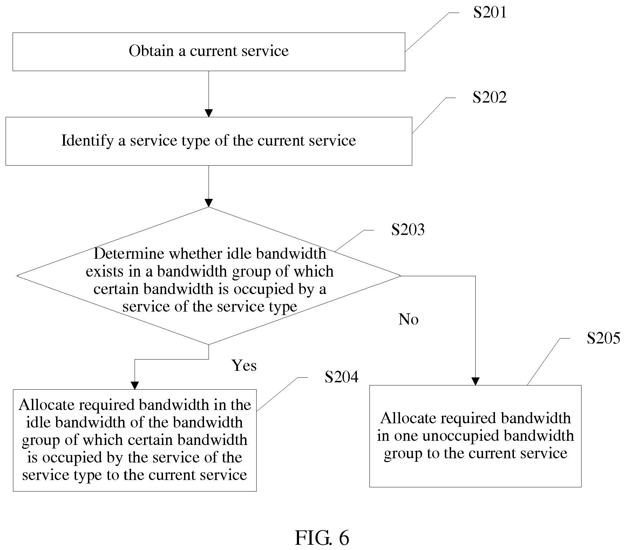

FIG. 6 is a schematic flow diagram of a second embodiment of a method for allocating a bandwidth resource according to an embodiment of the present invention. As shown in FIG. 6, the method includes:
S201. Obtain a current service.
S202. Identify a service type of the current service.
S203. Determine whether idle bandwidth exists in a bandwidth group of which certain bandwidth is occupied by a service of the service type, and if the idle bandwidth exists, perform step S204 to allocate required bandwidth in the idle bandwidth of the bandwidth group of which certain bandwidth is occupied by the service of the service type to the current service; and if no idle bandwidth exists, perform step S205 to allocate required bandwidth in one unoccupied bandwidth group to the current service, where the bandwidth resource includes N bandwidth groups with same bandwidth, and the bandwidth of the bandwidth group is the least common multiple of bandwidth required by service types that need to be processed.
S204. Allocate the required bandwidth in idle of the bandwidth group of which certain bandwidth is occupied by the service of the service type to the current service.
S205. Allocate required bandwidth in one unoccupied bandwidth group to the current service.

The unoccupied bandwidth group is a bandwidth group that is not used, where all bandwidth of the bandwidth group is unoccupied bandwidth.

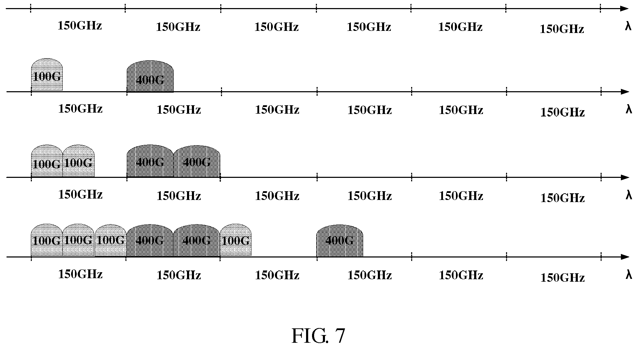

For a specific allocation process, reference may be made to that shown in FIG. 7. It is assumed that the service types that need to be processed include a 100G service and a 400G service, where bandwidth required by the 100G service is 50 GHz, and bandwidth required by the 400G service is 75 GHz; in this case, the bandwidth resource is grouped into N bandwidth groups with bandwidth of 150 GHz. If a current service is the 100G service, because no bandwidth group of which certain bandwidth is occupied by the service of the service type exists at this time, step S205 may be performed to allocate required bandwidth in one unoccupied bandwidth group to the current service, for example, to allocate required bandwidth in the first bandwidth group to the current service. After the current service is allocated, one 400G service requires allocation of bandwidth; in this case, a current service is the 400G service, and similarly, no bandwidth group of which certain bandwidth is occupied by the service of the service type exists at this time; step S205 may be performed to allocate required bandwidth in one unoccupied bandwidth group to the current service, for example, to allocate required bandwidth in the second bandwidth group to the current service, which is shown in line 2 of FIG. 7.

When a current service is the 100G service again, a bandwidth group of which certain bandwidth is occupied by a service of the service type exists at this time, and idle bandwidth exists in the bandwidth group, such as the first group in FIG. 7; and steps S203 and S204 may be performed to allocate required bandwidth in the idle bandwidth of the first bandwidth group to the current service. When a current service is the 400G service again, a bandwidth group of which certain bandwidth is occupied by a service of the service type also exists at this time, and idle bandwidth exists in the bandwidth group, such as the second group in FIG. 7; and steps S203 and S204 may be performed to allocate required bandwidth in the idle bandwidth of the second bandwidth group to the current service. When no idle bandwidth exists in the first group, that is, no idle bandwidth exists in the bandwidth group of which certain bandwidth is occupied by the service of the service type, if a current service is the 100G service at this time, step S205 may be performed to allocate required bandwidth in the third group to the current service, which is specifically shown in line 4 of FIG. 7.

According to this embodiment, it is determined whether idle bandwidth exists in a bandwidth group of which certain bandwidth is occupied by a service of a service type, and if the idle bandwidth exists, required bandwidth in the idle bandwidth is allocated to a current service, which can reduce mutual interference in a process of transmitting services of a plurality of service types, support a bandwidth allocation manner in an FBON, and can prevent a bandwidth fragment from being generated in a process of allocating bandwidth to a service; moreover, more unoccupied bandwidth groups are retained in a bandwidth allocation process, so that the bandwidth resource may be allocated to services of more types.

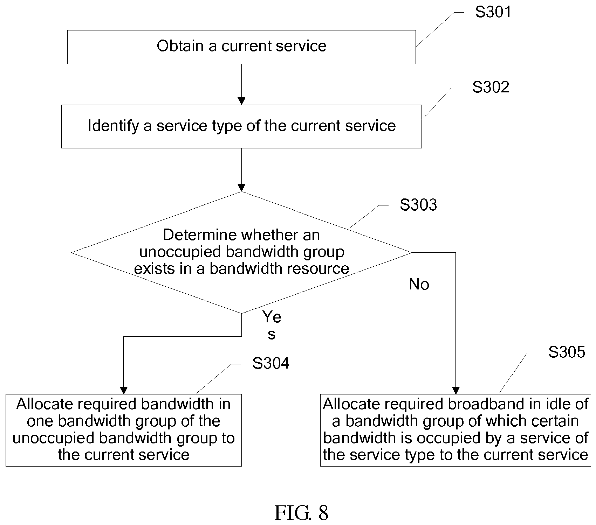

FIG. 8 is a schematic flow diagram of a third embodiment of a method for allocating a bandwidth resource according to an embodiment of the present invention. As shown in FIG. 8, the method includes:
S301. Obtain a current service.
S302. Identify a service type of the current service.
S303. Determine whether an unoccupied bandwidth group exists in the bandwidth resource, and if the unoccupied bandwidth group exists, perform step S304 to allocate required bandwidth in one bandwidth group among the unoccupied bandwidth groups to the current service; and if no unoccupied bandwidth group exists, perform step S305 to allocate required bandwidth in idle of a bandwidth group of which certain bandwidth is occupied by a service of the service type to the current service, where the bandwidth resource includes N bandwidth groups with same bandwidth, and the bandwidth of the bandwidth group is the least common multiple of bandwidth required by service types that need to be processed.
S304. Allocate the required bandwidth in the one bandwidth group among the unoccupied bandwidth groups to the current service.
Step S304 is performed to allocate the required bandwidth in the one bandwidth group among the unoccupied bandwidth groups to the current service, that is, the unoccupied bandwidth group exists in the bandwidth resource at this time.

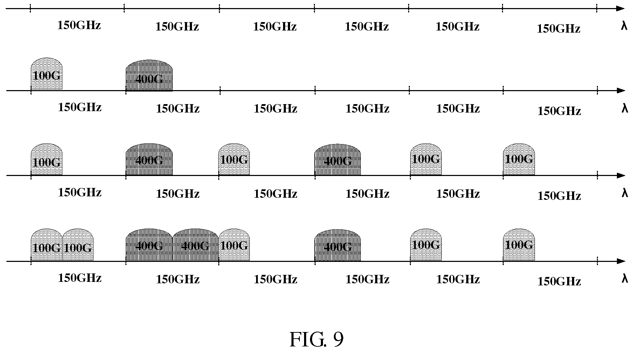

For a specific allocation process, reference may be made to that shown in FIG. 9. It is assumed that the service types that need to be allocated include a 100G service and a 400G service, where bandwidth required by the 100G service is 50 GHz, and bandwidth required by the 400G service is 75 GHz; in this case, the bandwidth resource is grouped into N bandwidth groups with bandwidth of 150 GHz. If a current service is the 100G service, an unoccupied bandwidth group exists in the bandwidth resource at this time, and step S304 is performed to allocate required bandwidth in the first bandwidth group to the current service. If a current service is the 400G after the current service is allocated, an unoccupied bandwidth group still exists in the bandwidth resource at this time, and step S304 is performed to allocate required bandwidth in the second bandwidth group to the current service, which is specifically shown in line 2 of FIG. 9.

When a current service is the 100G service again, an unoccupied bandwidth group still exists in the bandwidth resource at this time, and step S304 is performed to allocate required bandwidth in the third bandwidth group to the current service. When a current service is the 400G service again, an unoccupied bandwidth group still exists in the bandwidth resource at this time, and step S304 is performed to allocate required bandwidth in the fourth bandwidth group to the current service, which is specifically shown in line 3 of FIG. 9.

S305. Allocate required bandwidth in idle bandwidth of a bandwidth group of which certain bandwidth is occupied by a service of the service type to the current service.

When no unoccupied bandwidth group exists in the bandwidth resource, step S305 is performed to allocate the required bandwidth in the idle bandwidth of the bandwidth group of which certain bandwidth is occupied by the service of the service type to the current service; that is, all bandwidth groups in the bandwidth resource are occupied at this time, which is shown in line 3 or line 4 of FIG. 9.

As shown in line 3 of FIG. 9, when no unoccupied bandwidth group exists in the bandwidth resource, if the first bandwidth group is the bandwidth group of which certain bandwidth is occupied by the service of the service type when a current service is the 100G service, step S305 may be performed to allocate the required bandwidth in the idle bandwidth of the first bandwidth group to the current service, which is shown in line 4 of FIG. 9.

It should be noted that when a plurality of bandwidth groups of which certain bandwidth is occupied by a service of the service type exists, step S305 may also be allocating required bandwidth in idle bandwidth of a bandwidth group having most idle bandwidth among the plurality of bandwidth groups of which certain bandwidth is occupied by the service of the service type to the current service.

It is assumed that the bandwidth groups of which certain bandwidth is occupied by a service of the service type include a bandwidth group 1, a bandwidth group 2, and a bandwidth group 3; in this case, step S305 is performed to select a bandwidth group having most idle bandwidth among the three bandwidth groups, and allocate required bandwidth in idle bandwidth of the selected bandwidth group having the most idle bandwidth to the current service. For example, if the bandwidth group 1 has most idle bandwidth, required bandwidth in idle bandwidth of the bandwidth group 1 is allocated to the current service.

Certainly, another case exists, which is shown in line 3 of FIG. 9. It is assumed that the current service at this time is a 100G service; in this case, bandwidth groups of which certain bandwidth is occupied by a service of the service type include the first, third, fifth, and sixth bandwidth groups, and idle bandwidth of these bandwidth groups is the same; that is, a plurality of bandwidth groups having most idle bandwidth among the bandwidth groups of which certain bandwidth is occupied by the service of the service type exists; in this case, step S305 is performed to allocate required bandwidth in idle bandwidth of one bandwidth group of the plurality of bandwidth groups having the same idle bandwidth to the current service. As shown in line 4 of FIG. 9, required bandwidth in idle bandwidth of the first bandwidth group is allocated to the current service.

It should be noted that when a plurality of bandwidth groups of which certain bandwidth is occupied by the service of the service type exists, step S305 may further include:
selecting a bandwidth group in which idle bandwidth exists from the plurality of bandwidth groups of which certain bandwidth is occupied by the service of the service type; and
allocating required bandwidth in idle bandwidth of one bandwidth group of the selected bandwidth group to the current service.

According to this embodiment, it is determined whether an unoccupied bandwidth group exists in the bandwidth resource, and if the unoccupied bandwidth group exists, required bandwidth in one bandwidth group among the unoccupied bandwidth groups is allocated to the current service, which reduces mutual interference in a process of transmitting services of a plurality of service types, supports a bandwidth allocation manner in an FBON, and can prevent a bandwidth fragment from being generated in a process of allocating bandwidth to a service; moreover, services as few as possible are allocated to each bandwidth group, and in this way, mutual interference in a service transmission process is the least.

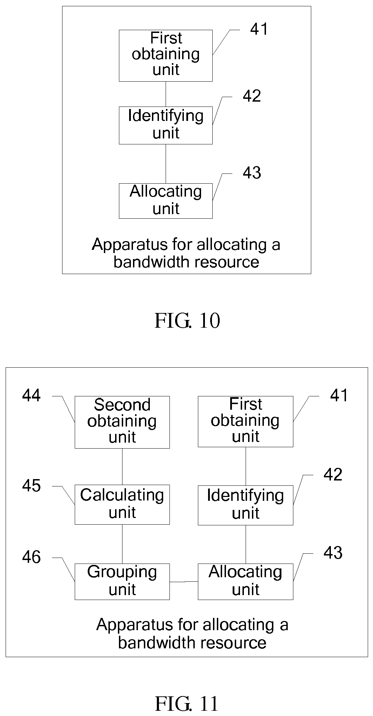

FIG. 10 is a schematic structural diagram of a first embodiment of an apparatus for allocating a bandwidth resource according to an embodiment of the present invention. As shown in FIG. 10, the apparatus includes a first obtaining unit 41, an identifying unit 42, and an allocating unit 43.

The first obtaining unit 41 is configured to obtain a current service.

The current service is a service that currently requires allocation of bandwidth.

The identifying unit 42 is configured to identify a service type of the current service obtained by the first obtaining unit 41.

The allocating unit 43 is configured to allocate required bandwidth in idle bandwidth of a bandwidth group that is not occupied by a service of another service type to the current service, where the another service type refers to a service type that is different from the service type of the current service, each bandwidth group is allocated to only services of a same service type, the bandwidth resource includes N bandwidth groups with same bandwidth, and the bandwidth of the bandwidth group is the least common multiple of bandwidth required by service types that need to be processed.

The required bandwidth in the idle bandwidth of the bandwidth group that is not occupied by the service of the another service type is allocated to the current service; because the required bandwidth in the idle bandwidth is allocated to the current service, on-demand allocation can be implemented, so as to support a bandwidth allocation manner in an FBON. Moreover, allocating each bandwidth group to only services of a same service type is adopted in an allocation process. For example, a bandwidth group 1 corresponds to services of a service type A, a bandwidth group 2 corresponds to services of a service type B, and a bandwidth group 3 corresponds to services of a service type D. Certainly, service types corresponding to several bandwidth groups may also be the same. For example, a bandwidth group 1 corresponds to services of a service type A, and a bandwidth group 4 also corresponds to the services of the service type A. In this case, that each bandwidth group is allocated to only one service type is ensured, and mutual interference in a process of transmitting services of a plurality of service types can be reduced.

It should be noted that in this embodiment, the bandwidth group that is not occupied by the service of the another service type may specifically be a bandwidth group of which certain bandwidth is occupied by a service of the same service type as the current service, and may also be an unoccupied bandwidth group.

As an optional implementation manner, the allocating unit 43 may specifically be configured to allocate required bandwidth in the idle bandwidth of the bandwidth group of which certain bandwidth is occupied by the service of the same service type as the current service to the current service, or allocate required bandwidth in one unoccupied bandwidth group to the current service.

It should be noted that the bandwidth resource includes N bandwidth groups with same bandwidth, and the bandwidth of the bandwidth group is bandwidth of the least common multiple of the bandwidth required by the service types that need to be processed. In this case, that bandwidth of each bandwidth group is an integer multiple of bandwidth required by any one service type among the service types that need to be processed can be ensured, so that no bandwidth fragment occurs in a bandwidth allocation process. As long as idle bandwidth exists in a bandwidth group, the idle bandwidth definitely can be used by a service of a service type to which the bandwidth group is allocated. It is assumed that the service types that need to be processed include a service type A, a service type B, a service type C, and a service type D, where bandwidth required by the service type A is 10 GHz, bandwidth required by the service type B is 20 GHz, bandwidth required by the service type C is 30 GHz, and bandwidth required by the service type D is 40 GHz, the least common multiple of bandwidth required by the service types that need to be processed is 120 GHz. In this case, bandwidth of each bandwidth group is 120 GHz; because the bandwidth of each bandwidth group is allocated to only services of a same service type, it is impossible for a bandwidth fragment to occur in an allocation process.

It should be noted that in another implementation manner, as shown in FIG. 11, the apparatus may further include:
a second obtaining unit 44, configured to obtain the bandwidth required by the service types that need to be processed;
a calculating unit 45, configured to calculate the least common multiple of the bandwidth that is required by the service types that need to be processed and obtained by the second obtaining unit 44; and
a grouping unit 46, configured to group the bandwidth resource according to the least common multiple, to obtain the N bandwidth groups with same bandwidth, where the bandwidth of the bandwidth group is bandwidth of the least common multiple. It is assumed that the service types that need to be processed include a service type A, a service type B, a service type C, a service type D, and a service type E, where bandwidth required by the service type A is 10 GHz, bandwidth required by the service type B is 20 GHz, bandwidth required by the service type C is 30 GHz, bandwidth required by the service type D is 40 GHz, and bandwidth required by the service type E is 120 GHz. A calculated least common multiple is 120 GHz; then, the bandwidth resource is grouped into N bandwidth groups with bandwidth of 120 GHz.

Certainly, when the grouping unit 46 groups the bandwidth resource according to the least common multiple, to obtain the N bandwidth groups with same bandwidth, the bandwidth of the bandwidth group may also be an integer multiple of the bandwidth of the least common multiple. If the least common multiple for service types that need to be processed is 120 GHz, the bandwidth resource may be grouped into N bandwidth groups of bandwidth of 120 GHz, 240 GHz, or 360 GHz. Bandwidth of each bandwidth group that is grouped in this way is also an integer multiple of bandwidth required by any one service type among the service types that need to be processed, so that no bandwidth fragment occurs in a bandwidth allocation process either.

According to this embodiment, a bandwidth resource includes N bandwidth groups with same bandwidth, and the bandwidth of the bandwidth group is the least common multiple of bandwidth required by service types that need to be processed; an allocating unit allocates required bandwidth in idle bandwidth of a bandwidth group that is not occupied by a service of another service type to a current service, where the another service type refers to a service type that is different from a service type of the current service, and each bandwidth group is allocated to only services of a same service type; in this case, mutual interference in a process of transmitting services of a plurality of service types can be reduced; moreover, the allocating unit allocates the required bandwidth in the idle bandwidth to the current service, and in this case, on-demand allocation of the bandwidth resource can be implemented, so as to support a bandwidth allocation manner in an FBON, and can prevent a bandwidth fragment from being generated in a process of allocating bandwidth to a service.

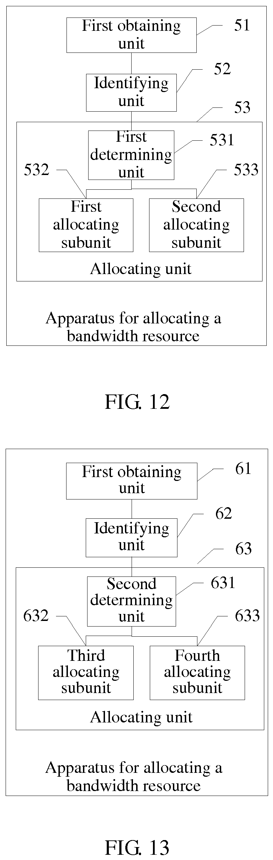

FIG. 12 is a schematic structural diagram of a second embodiment of a method for allocating a bandwidth resource according to an embodiment of the present invention. As shown in FIG. 12, the apparatus includes a first obtaining unit 51, an identifying unit 52, and an allocating unit 53, where the allocating unit includes a first determining unit 531, a first allocating subunit 532, and a second allocating subunit 533.

The first obtaining unit 51 is configured to obtain a current service.

The identifying unit 52 is configured to identify a service type of the current service obtained by the first obtaining unit 51.

The first determining unit 531 is configured to determine whether idle bandwidth exists in a bandwidth group of which certain bandwidth is occupied by a service of the service type.

The first allocating subunit 532 is configured to: when a result of the determining by the first determining unit 531 is yes, allocate required bandwidth in the idle bandwidth of the bandwidth group of which certain bandwidth is occupied by the service of the service type to the current service.

That the result of the determining by the first determining unit 531 is yes refers to that idle bandwidth exists in the bandwidth group of which certain bandwidth is occupied by the service of the service type; in this case, the first allocating subunit 532 allocates the required bandwidth in the idle bandwidth of the bandwidth group of which certain bandwidth is occupied by the service of the service type to the current service.

The second allocating subunit 533 is configured to: when the result of the determining by the first determining unit 53 is no, allocate required bandwidth in one unoccupied bandwidth group to the current service.

That the result of the determining by the first determining unit 53 is no refers to that no idle bandwidth exists in the bandwidth group of which certain bandwidth is occupied by the service of the service type, and may also refer to that no bandwidth group of which certain bandwidth is occupied by the service of the service type exists; in this case, the second allocating subunit 533 allocates required bandwidth in one unoccupied bandwidth group to the current service.

It should be noted that, in this embodiment, the bandwidth resource includes N bandwidth groups with same bandwidth, and the bandwidth of the bandwidth group is bandwidth of the least common multiple of bandwidth required by service types that need to be processed. In this case, that bandwidth of each bandwidth group is an integer multiple of bandwidth required by any one service type among the service types that need to be processed can be ensured, so that no bandwidth fragment occurs in a bandwidth allocation process. As long as idle bandwidth exists in a bandwidth group, the idle bandwidth definitely can be used by a service of a service type to which the bandwidth group is allocated.

A specific allocation process is shown in FIG. 7. It is assumed that the service types that need to be processed include a 100G service and a 400G service, where bandwidth required by the 100G service is 50 GHz, and bandwidth required by the 400G service is 75 GHz; in this case, the bandwidth resource is grouped into N bandwidth groups with bandwidth of 150 GHz. If a current service is the 100G service, because no bandwidth group of which certain bandwidth is occupied by the service of the service type exists at this time, that is, the result of the determining by the first determining unit 53 is no, in this case, the second allocating subunit 533 may allocate required bandwidth in one unoccupied bandwidth group to the current service, for example, required bandwidth in the first bandwidth group is allocated to the current service. After the current service is allocated, one 400G service requires allocation of bandwidth; in this case, a current service is the 400G service, and similarly, no bandwidth group of which certain bandwidth is occupied by the service of the service type exists at this time; the second allocating subunit 533 may allocate required bandwidth in one unoccupied bandwidth group to the current service, for example, to allocate required bandwidth in the second bandwidth group to the current service, which is shown in line 2 of FIG. 7.

When a current service is the 100G service again, a bandwidth group of which certain bandwidth is occupied by a service of the service type exists at this time, and idle bandwidth exists in the bandwidth group, such as the first group in FIG. 7, the result of the determining by the first determining unit 53 is yes, and the first allocating subunit 532 allocates required bandwidth in the idle bandwidth of the first bandwidth group to the current service. When a current service is the 400G service again, a bandwidth group of which certain bandwidth is occupied by a service of the service type exists at this time, and idle bandwidth exists in the bandwidth group, such as the second group in FIG. 7, the result of the determining by the first determining unit 53 is yes, and the first allocating subunit 532 allocates required bandwidth in the idle bandwidth of the second bandwidth group to the current service. When no idle bandwidth exists in the first group, that is, no idle bandwidth exists in the bandwidth group of which certain bandwidth is occupied by the service of the service type, if a current service is the 100G service at this time, the result of the determining by the first determining unit 53 is no, and the second allocating subunit 533 may allocate required bandwidth in the third group to the current service, which is specifically shown in line 4 of FIG. 7.

According to this embodiment, a first determining unit determines whether idle bandwidth exists in a bandwidth group of which certain bandwidth is occupied by a service of a service type, and if the idle bandwidth exists, required bandwidth in the idle bandwidth is allocated to a current service, which can reduce mutual interference in a process of transmitting services of a plurality of service types, supports a bandwidth allocation manner in an FBON, and can prevent a bandwidth fragment from being generated in a process of allocating bandwidth to a service; moreover, more unoccupied bandwidth groups are retained in a bandwidth allocation process, so that the bandwidth resource may be allocated to services of more types.

FIG. 13 is a schematic flow diagram of a third embodiment of a method for allocating a bandwidth resource according to an embodiment of the present invention. As shown in FIG. 13, the apparatus includes a first obtaining unit 61, an identifying unit 62, and an allocating unit 63, where the allocating unit includes a second determining unit 631, a third allocating subunit 632, and a fourth allocating subunit 633.

The first obtaining unit 61 is configured to obtain a current service.

The identifying unit 62 is configured to identify a service type of the current service obtained by the first obtaining unit 61.

The second determining unit 631 is configured to determine whether an unoccupied bandwidth group exists in the bandwidth resource.

The third allocating subunit 632 is configured to: when a result of the determining by the second determining unit 631 is yes, allocate required bandwidth in one bandwidth group among the unoccupied bandwidth groups to the current service.

That the result of the determining by the second determining unit 631 is yes refers to that an unoccupied bandwidth group exists in the bandwidth resource; in this case, the third allocating subunit 632 allocates required bandwidth in any one bandwidth group among the unoccupied bandwidth groups to the current service.

Specifically, as shown in FIG. 9, it is assumed that there are two service types currently, that is, a 100G service and a 400G service, where bandwidth required by the 100G service is 50 GHz, and bandwidth required by the 400G service is 75 GHz; in this case, the bandwidth resource is grouped into N bandwidth groups with bandwidth of 150 GHz. If a current service is the 100G service, the result of the determining by the second determining unit 63 is yes at this time, and the third allocating subunit 632 allocates required bandwidth in one bandwidth group among the unoccupied bandwidth groups to the current service, for example, to allocate required bandwidth in the first bandwidth group to the current service. If the current service changes to 400G after allocation for the current service is completed, the result of the determining by the second determining unit 63 is still yes at this time, and the third allocating subunit 632 allocates required bandwidth in one bandwidth group among the unoccupied bandwidth groups to the current service, for example, to allocate required bandwidth in the second bandwidth group to the current service, which is specifically shown in line 2 of FIG. 9.

When the current service changes to the 100G service again, the result of the determining by the second determining unit 63 is still yes at this time, and the third allocating subunit 632 allocates required bandwidth in one bandwidth group among the unoccupied bandwidth groups to the current service, for example, to allocate required bandwidth in the third bandwidth group to the current service. When the current service changes to the 400G service again, the result of the determining by the second determining unit 63 is still yes at this time, and the third allocating subunit 632 allocates required bandwidth in one bandwidth group among the unoccupied bandwidth groups to the current service, for example, to allocate required bandwidth in the fourth bandwidth group to the current service, which is specifically shown in line 3 of FIG. 9.

The fourth allocating subunit 633 is configured to: when the result of the determining by the second determining unit 63 is no, allocate required bandwidth in idle bandwidth of a bandwidth group of which certain bandwidth is occupied by a service of the service type to the current service.

That the result of the determining by the second determining unit 63 is no refers to that no unoccupied bandwidth group exists in the bandwidth resource; in this case, the fourth allocating subunit 633 allocates the required bandwidth in the idle bandwidth of the bandwidth group of which certain bandwidth is occupied by the service of the service type to the current service.

The fourth allocating subunit 633 allocates the required bandwidth in the idle bandwidth of the bandwidth group of which certain bandwidth is occupied by the service of the service type to the current service; that is, no unoccupied bandwidth group exists in the bandwidth resource at this time. That is, all bandwidth groups in the bandwidth resource are occupied; certainly, it is possible that only a part of bandwidth in the bandwidth group is occupied, which is shown in line 3 or line 4 of FIG. 9.

As shown in line 3 of FIG. 9, when no unoccupied bandwidth group exists in the bandwidth resource, the result of the determining by the second determining unit 63 is no at this time; if the first bandwidth group is a bandwidth group of which certain bandwidth is occupied by a service of the service type when a current service is a 100G service, the fourth allocating subunit 633 allocates required bandwidth in idle bandwidth of a bandwidth group corresponding to the service type to the current service, for example, to allocate required bandwidth in the first bandwidth group to the current service, which is shown in line 4 of FIG. 9.

It should be noted that when a plurality of bandwidth groups of which certain bandwidth is occupied by a service of the service type exists, the fourth allocating subunit 633 may be further specifically configured to allocate required bandwidth in idle bandwidth of a bandwidth group having most idle bandwidth among the plurality of bandwidth groups of which certain bandwidth is occupied by the service of the service type to the current service.

It is assumed that the bandwidth groups of which certain bandwidth is occupied by a service of the service type include a bandwidth group 1, a bandwidth group 2, and a bandwidth group 3; in this case, the fourth allocating subunit 633 selects a bandwidth group having most idle bandwidth from the three bandwidth groups, and allocates required bandwidth in idle bandwidth of the selected bandwidth group having most idle bandwidth to the current service. If the bandwidth group 1 has most idle bandwidth, the allocating unit 64 allocates required bandwidth in the idle bandwidth of the bandwidth group 1 to the current service.

Certainly, another case exists, which is shown in line 3 of FIG. 9. It is assumed that the current service in this case is a 100G service; in this case, bandwidth groups of which certain bandwidth is occupied by a service of the service type include the first, third, fifth, and sixth bandwidth groups, and idle bandwidth of these bandwidth groups is the same; that is, a plurality of bandwidth groups having most idle bandwidth among the bandwidth groups of which certain bandwidth is occupied by the service of the service type exists; in this case, the fourth allocating subunit 633 allocates required bandwidth in idle bandwidth of one bandwidth group of the plurality of bandwidth groups having the same idle bandwidth to the current service, where the plurality of bandwidth groups is bandwidth groups having most unoccupied bandwidth among the bandwidth groups of a same service type. As shown in line 4 of FIG. 9, required bandwidth in idle bandwidth of the first bandwidth group is allocated to the current service.

It should be noted that when a plurality of bandwidth groups of which certain bandwidth is occupied by a service of the service type exists, the fourth allocating subunit 633 may be further specifically configured to select a bandwidth group in which idle bandwidth exists from the plurality of bandwidth groups of which certain bandwidth is occupied by the service of the service type, and allocate required bandwidth in idle bandwidth of one bandwidth group of the selected bandwidth group to the current service.

According to this embodiment, a second determining unit determines whether an unoccupied bandwidth group exists in a bandwidth resource, and if the unoccupied bandwidth group exists, an allocating unit allocates required bandwidth in one bandwidth group among the unoccupied bandwidth groups to the current service, which implements a reduction in mutual interference in a process of transmitting services of a plurality of service types and supports a bandwidth allocation manner in an FBON, and can prevent a bandwidth fragment from being generated in a process of allocating bandwidth to a service; moreover, services as few as possible are allocated to each bandwidth group, and in this way, mutual interference in a service transmission process is the least.

A person of ordinary skill in the art may understand that all or a part of the processes of the methods in the foregoing embodiments may be completed by a computer program instructing relevant hardware. The program may be stored in a computer readable storage medium. When the program runs, the processes of the methods in the embodiments are performed. The storage medium may include: a magnetic disk, an optical disc, a read-only memory (Read-Only Memory, ROM), or a random access memory (Random Access Memory, RAM).

The above are merely exemplary embodiments of the present invention, but are not intended to limit the protection scope of the present invention. Therefore, equivalent changes derived according to the claims of the present invention shall fall within the protection scope of the present invention.

## Claims

1. A method for allocating a bandwidth resource, comprising:
obtaining (S101) a current service;
identifying (S102) a service type of the current service; and
**characterized in that** the method further comprises:
allocating (S103) required bandwidth in idle bandwidth of a bandwidth group that is not occupied by a service of another service type to the current service, wherein the another service type refers to a service type that is different from the service type of the current service, each bandwidth group is allocated to only services of a same service type, the bandwidth resource comprises N bandwidth groups with same bandwidth in frequency, and the bandwidth of the bandwidth group is the least common multiple of bandwidth required by service types that need to be processed.

2. The method according to claim 1, wherein before the obtaining a current service, the method further comprises:
obtaining the bandwidth required by the service types that need to be processed;
calculating the least common multiple of the obtained bandwidth required by the service types that need to be processed; and
grouping the bandwidth resource according to the least common multiple, so as to obtain the N bandwidth groups with same bandwidth, wherein the bandwidth of the bandwidth group is the least common multiple.

3. The method according to claim 1 or 2, wherein the allocating (S103) required bandwidth in idle bandwidth of a bandwidth group that is not occupied by a service of another service type to the current service comprises:
determining (S203) whether idle bandwidth exists in a bandwidth group of which certain bandwidth is occupied by a service of the service type, and if the idle bandwidth exists, allocating (S204) the required bandwidth in the idle bandwidth to the current service; and
if no idle bandwidth exists, allocating (S205) required bandwidth in one unoccupied bandwidth group to the current service.

4. The method according to claim 1 or 2, wherein the allocating (S103) required bandwidth in idle bandwidth of a bandwidth group that is not occupied by a service of another service type to the current service comprises:
determining (S303) whether an unoccupied bandwidth group exists in the bandwidth resource, and if the unoccupied bandwidth group exists, allocating (S304) required bandwidth in one bandwidth group among the unoccupied bandwidth groups to the current service; and
if no unoccupied bandwidth group exists, allocating (S305) required bandwidth in idle bandwidth of a bandwidth group of which certain bandwidth is occupied by a service of the service type to the current service.

5. The method according to claim 4, wherein when a plurality of bandwidth groups of which certain bandwidth is occupied by the service of the service type exists, the allocating (S304) required bandwidth in idle bandwidth of a bandwidth group of which certain bandwidth is occupied by a service of the service type to the current service comprises:
selecting a bandwidth group in which idle bandwidth exists from the plurality of bandwidth groups of which certain bandwidth is occupied by the service of the service type; and
allocating required bandwidth in idle bandwidth of one bandwidth group in the selected bandwidth group to the current service.

6. An apparatus for allocating a bandwidth resource, comprising a first obtaining unit (41, 51, 61), an identifying unit (42, 52, 62), and an allocating unit (43, 53, 63), wherein
the first obtaining unit (41, 51, 61) is configured to obtain a current service;
the identifying unit (42, 52, 62) is configured to identify a service type of the current service obtained by the first obtaining unit; and
**characterized in that**
the allocating unit (43, 53, 63) is configured to allocate required bandwidth in idle bandwidth of a bandwidth group that is not occupied by a service of another service type to the current service, wherein the another service type refers to a service type that is different from the service type of the current service, each bandwidth group is allocated to only services of a same service type, the bandwidth resource comprises N bandwidth groups with same bandwidth in frequency, and the bandwidth of the bandwidth group is the least common multiple of bandwidth required by service types that need to be processed.

7. The apparatus according to claim 6, wherein the apparatus further comprises:
a second obtaining unit (44), configured to obtain the bandwidth required by the service types that need to be processed;
a calculating unit (45), configured to calculate the least common multiple of the bandwidth that is required by the service types that need to be processed and obtained by the second obtaining unit; and
a grouping unit (46), configured to group the bandwidth resource according to the least common multiple to obtain the N bandwidth groups with same bandwidth, wherein the bandwidth of the bandwidth group is the least common multiple.

8. The apparatus according to claim 6 or 7, wherein the allocating unit (53) comprises:
a first determining unit (531), configured to determine whether idle bandwidth exists in a bandwidth group of which certain bandwidth is occupied by a service of the service type;
a first allocating subunit (532), configured to: when a result of the determining by the first determining unit is yes, allocate required bandwidth in the idle bandwidth of the
bandwidth group of which certain bandwidth is occupied by the service of the service type to the current service; and
a second allocating subunit (533), configured to: when the result of the determining by the first determining unit is no, allocate required bandwidth in one unoccupied bandwidth group to the current service.

9. The apparatus according to claim 6 or 7, wherein the allocating unit (63) comprises:
a second determining unit (631), configured to determine whether an unoccupied bandwidth group exists in the bandwidth resource; a
a third allocating subunit (632), configured to: when a result of the determining by the second determining unit is yes, allocate required bandwidth in one bandwidth group among the unoccupied bandwidth groups to the current service; and
a fourth allocating subunit (633), configured to: when the result of the determining by the second determining unit is no, allocate required bandwidth in idle bandwidth of a bandwidth group of which certain bandwidth is occupied by a service of the service type to the current service.

10. The apparatus according to claim 9, wherein when a plurality of bandwidth groups of which certain bandwidth is occupied by the service of the service type exists, the fourth allocating subunit (633) is further configured to select a bandwidth group in which idle bandwidth exists from the plurality of bandwidth groups of which certain bandwidth is occupied by the service of the service type, and allocate required bandwidth in idle bandwidth of one bandwidth group of the selected bandwidth group to the current service.

## Patentansprüche

1. Verfahren zum Zuweisen eines Bandbreiten-Betriebsmittels, wobei das Verfahren Folgendes umfasst:
Erhalten (S101) eines aktuellen Dienstes;
Identifizieren (S102) eines Diensttyps des aktuellen Dienstes; und
**dadurch gekennzeichnet, dass** das Verfahren ferner Folgendes umfasst:
Zuweisen (S103) der erforderlichen Bandbreite in der Leerlaufbandbreite einer Bandbreitengruppe, die nicht von einem Dienst eines weiteren Diensttyps belegt ist, zu dem aktuellen Dienst, wobei sich der weitere Diensttyp auf einen Diensttyp bezieht, der von dem Diensttyp des aktuellen Dienstes verschieden ist, jede Bandbreitengruppe nur den Diensten eines gleichen Diensttyps zugewiesen wird, das Bandbreiten-Betriebsmittel N Bandbreitengruppen mit der gleichen Bandbreite in der Frequenz umfasst und die Bandbreite der Bandbreitengruppe das kleinste gemeinsame Vielfache der Bandbreite ist, die von den Diensttypen benötigt wird, die verarbeitet werden müssen.

2. Verfahren nach Anspruch 1, wobei vor dem Erhalten eines aktuellen Dienstes das Verfahren ferner Folgendes umfasst:
Erhalten der Bandbreite, die von den Diensttypen benötigt wird, die verarbeitet werden müssen;
Berechnen des kleinsten gemeinsamen Vielfachen der erhaltenen Bandbreite, die von den Diensttypen benötigt wird, die verarbeitet werden müssen; und
Gruppieren des Bandbreiten-Betriebsmittels gemäß dem kleinsten gemeinsamen Vielfachen, um die N Bandbreitengruppen mit der gleichen Bandbreite zu erhalten, wobei die Bandbreite der Bandbreitengruppe das kleinste gemeinsame Vielfache ist.

3. Verfahren nach Anspruch 1 oder 2, wobei das Zuweisen (S103) der erforderlichen Bandbreite in der Leerlaufbandbreite einer Bandbreitengruppe, die nicht von einem Dienst eines weiteren Diensttyps belegt ist, zu dem aktuellen Dienst Folgendes umfasst:
Bestimmen (S203), ob die Leerlaufbandbreite in einer Bandbreitengruppe vorhanden ist, von der eine bestimmte Bandbreite durch einen Dienst des Diensttyps belegt ist, und, falls die Leerlaufbandbreite vorhanden ist, Zuweisen (S204) der erforderlichen Bandbreite in der Leerlaufbandbreite zu dem aktuellen Dienst; und
falls keine Leerlaufbandbreite vorhanden ist, Zuweisen (S205) der erforderlichen Bandbreite in einer nicht belegten Bandbreitengruppe zu dem aktuellen Dienst.

4. Verfahren nach Anspruch 1 oder 2, wobei das Zuweisen (S103) der erforderlichen Bandbreite in der Leerlaufbandbreite einer Bandbreitengruppe, die nicht durch einen Dienst eines weiteren Diensttyps belegt ist, zu dem aktuellen Dienst Folgendes umfasst:
Bestimmen (S303), ob in dem Bandbreiten-Betriebsmittel eine nicht belegte Bandbreitengruppe vorhanden ist, und, falls die nicht belegte Bandbreitengruppe vorhanden ist, Zuweisen (S304) der erforderlichen Bandbreite in einer Bandbreitengruppe unter den nicht belegten Bandbreitengruppen zu dem aktuellen Dienst; und
falls keine nicht belegte Bandbreitengruppe vorhanden ist, Zuweisen (S305) der erforderlichen Bandbreite in der Leerlaufbandbreite einer Bandbreitengruppe, von der eine bestimmte Bandbreite durch einen Dienst des Diensttyps belegt ist, zu dem aktuellen Dienst.

5. Verfahren nach Anspruch 4, wobei, wenn mehrere Bandbreitengruppen, von denen eine bestimmte Bandbreite durch den Dienst des Diensttyps belegt ist, vorhanden sind, das Zuweisen (S304) der erforderlichen Bandbreite in der Leerlaufbandbreite einer Bandbreitengruppe, von der eine bestimmte Bandbreite durch einen Dienst des Diensttyps belegt ist, zu dem aktuellen Dienst Folgendes umfasst:
Auswählen einer Bandbreitengruppe, in der die Leerlaufbandbreite vorhanden ist, aus den mehreren Bandbreitengruppen, von denen eine bestimmte Bandbreite durch den Dienst des Diensttyps belegt ist; und
Zuweisen der erforderlichen Bandbreite in der Leerlaufbandbreite einer Bandbreitengruppe in der ausgewählten Bandbreitengruppe zu dem aktuellen Dienst.

6. Vorrichtung zum Zuweisen eines Bandbreiten-Betriebsmittels, die eine erste Erhalteeinheit (41, 51, 61), eine Identifizierungseinheit (42, 52, 62) und eine Zuweisungseinheit (43, 53, 63) umfasst, wobei
die erste Erhalteeinheit (41, 51, 61) konfiguriert ist, einen aktuellen Dienst zu erhalten;
die Identifizierungseinheit (42, 52, 62) konfiguriert ist, einen Diensttyp des aktuellen Dienstes, der durch die erste Erhalteeinheit erhalten wird, zu identifizieren; und **dadurch gekennzeichnet, dass**
die Zuweisungseinheit (43, 53, 63) konfiguriert ist, die erforderliche Bandbreite in der Leerlaufbandbreite einer Bandbreitengruppe, die nicht von einem Dienst eines weiteren Diensttyps belegt ist, dem aktuellen Dienst zuzuweisen, wobei sich der weitere Diensttyp auf einen Diensttyp bezieht, der von dem Diensttyp des aktuellen Dienstes verschieden ist, jede Bandbreitengruppe nur den Diensten eines gleichen Diensttyps zugewiesen wird, das Bandbreiten-Betriebsmittel N Bandbreitengruppen mit der gleichen Bandbreite in der Frequenz umfasst und die Bandbreite der Bandbreitengruppe das kleinste gemeinsame Vielfache der Bandbreite ist, die von den Diensttypen benötigt wird, die verarbeitet werden müssen.

7. Vorrichtung nach Anspruch 6, wobei die Vorrichtung ferner Folgendes umfasst:
eine zweite Erhalteeinheit (44), die konfiguriert ist, die Bandbreite, die von den Diensttypen benötigt wird, die verarbeitet werden müssen, zu erhalten;
eine Berechnungseinheit (45), die konfiguriert ist, das kleinste gemeinsame Vielfache der Bandbreite, die von den Diensttypen benötigt wird, die verarbeitet werden müssen, und die von der zweiten Erhalteeinheit erhalten wird, zu berechnen; und
eine Gruppierungseinheit (46), die konfiguriert ist, das Bandbreiten-Betriebsmittel gemäß dem kleinsten gemeinsamen Vielfachen zu gruppieren, um die N Bandbreitengruppen mit der gleichen Bandbreite zu erhalten, wobei die Bandbreite der Bandbreitengruppe das kleinste gemeinsame Vielfache ist.

8. Vorrichtung nach Anspruch 6 oder 7, wobei die Zuweisungseinheit (53) Folgendes umfasst:
eine erste Bestimmungseinheit (531), die konfiguriert ist, zu bestimmen, ob die Leerlaufbandbreite in einer Bandbreitengruppe vorhanden ist, von der eine bestimmte Bandbreite durch einen Dienst des Diensttyps belegt ist;
eine erste Zuweisungsuntereinheit (532), die konfiguriert ist: wenn ein Ergebnis des Bestimmens durch die erste Bestimmungseinheit ja lautet, die erforderliche Bandbreite in der Leerlaufbandbreite der Bandbreitengruppe, von der eine bestimmte Bandbreite von dem Dienst des Diensttyps belegt ist, dem aktuellen Dienst zuzuweisen; und
eine zweite Zuweisungsuntereinheit (533), die konfiguriert ist: wenn das Ergebnis des Bestimmens durch die erste Bestimmungseinheit nein lautet, die erforderliche Bandbreite in einer nicht belegten Bandbreitengruppe dem aktuellen Dienst zuzuweisen.

9. Vorrichtung nach Anspruch 6 oder 7, wobei die Zuweisungseinheit (63) Folgendes umfasst:
eine zweite Bestimmungseinheit (631), die konfiguriert ist, zu bestimmen, ob in dem Bandbreiten-Betriebsmittel eine nicht belegte Bandbreitengruppe vorhanden ist;
eine dritte Zuweisungsuntereinheit (632), die konfiguriert ist: wenn ein Ergebnis des Bestimmens durch die zweite Bestimmungseinheit ja lautet, die erforderliche Bandbreite in einer Bandbreitengruppe unter den nicht belegten Bandbreitengruppen dem aktuellen Dienst zuzuweisen; und
eine vierte Zuweisungsuntereinheit (633), die konfiguriert ist: wenn das Ergebnis des Bestimmens durch die zweite Bestimmungseinheit nein lautet, die erforderliche Bandbreite in der Leerlaufbandbreite einer Bandbreitengruppe, von der eine bestimmte Bandbreite durch einen Dienst des Diensttyps belegt ist, dem aktuellen Dienst zuzuweisen.

10. Vorrichtung nach Anspruch 9, wobei, wenn mehrere Bandbreitengruppen, von denen eine bestimmte Bandbreite durch den Dienst des Diensttyps belegt ist, vorhanden sind, die vierte Zuweisungsuntereinheit (633) ferner konfiguriert ist, eine Bandbreitengruppe, in der die Leerlaufbandbreite vorhanden ist, aus den mehreren Bandbreitengruppen, von denen eine bestimmte Bandbreite durch den Dienst des Diensttyps belegt ist, auszuwählen und die erforderliche Bandbreite in der Leerlaufbandbreite einer Bandbreitengruppe der ausgewählten Bandbreitengruppe dem aktuellen Dienst zuzuweisen.

## Revendications

1. Procédé d'allocation d'une ressource de bande passante, comprenant :
obtenir (S101) un service courant ;
identifier (S102) un type de service du service courant ; et
**caractérisé en ce que** le procédé comprend en outre :
allouer (S 103) une bande passante requise dans une bande passante libre d'un groupe de bande passante qui n'est pas occupé par un service d'un autre type de service au service courant, dans lequel l'autre type de service désigne un type de service qui est différent du type de service du service courant, chaque groupe de bande passante est alloué uniquement à des services d'un même type de service, la ressource de bande passante comprend N groupes de bande passante avec la même bande passante en fréquence, et la bande passante du groupe de bande passante est le plus petit commun multiple de la bande passante requise par les types de services qui doivent être traités.

2. Procédé selon la revendication 1, dans lequel, avant l'obtention d'un service courant, le procédé comprend en outre :
obtenir la bande passante requise par les types de services qui doivent être traités ;
calculer le plus petit commun multiple de la bande passante obtenue requise par les types de services qui doivent être traités ; et
grouper la ressource de bande passante en fonction du plus petit commun multiple, de manière à obtenir les N groupes de bande passante avec la même bande passante, dans lequel la bande passante du groupe de bande passante est le plus petit commun multiple.

3. Procédé selon la revendication 1 ou 2, dans lequel l'allocation (S103) de la bande passante requise dans la bande passante libre d'un groupe de bande passante qui n'est pas occupé par un service d'un autre type de service au service courant comprend :
déterminer (S203) si une bande passante libre existe dans un groupe de bande passante dont une certaine bande passante est occupée par un service du type de service, et si la bande passante libre existe, allouer (S204) la bande passante requise dans la bande passante libre au service courant ;
et
s'il n'existe pas de bande passante libre, allouer (S205) la bande passante requise dans un groupe de bande passante inoccupé au service courant.

4. Procédé selon la revendication 1 ou 2, dans lequel l'allocation (S103) de la bande passante requise dans la bande passante libre d'un groupe de bande passante qui n'est pas occupé par un service d'un autre type de service au service courant comprend :
déterminer (S303) si un groupe de bande passante inoccupé existe dans la ressource de bande passante, et si le groupe de bande passante inoccupé existe, allouer (S304) la bande passante requise dans un groupe de bande passante parmi les groupes de bande passante inoccupés au service courant ; et
s'il n'existe pas de groupe de bande passante inoccupé, allouer (S305) la bande passante requise dans la bande passante libre d'un groupe de bande passante dont une certaine bande passante est occupée par un service du type de service au service courant.

5. Procédé selon la revendication 4, dans lequel, lorsqu'une pluralité de groupes de bande passante dont une certaine bande passante est occupée par le service du type de service existent, l'allocation (S304) de la bande passante requise dans la bande passante libre d'un groupe de bande passante dont une certaine bande passante est occupée par un service du type de service au service courant comprend :
sélectionner un groupe de bande passante dans lequel une bande passante libre existe parmi la pluralité de groupes de bande passante dont une certaine bande passante est occupée par le service du type de service ; et
allouer la bande passante requise dans la bande passante libre d'un groupe de bande passante dans le groupe de bande passante sélectionné au service courant.

6. Appareil d'allocation d'une ressource de bande passante, comprenant une première unité d'obtention (41, 51, 61), une unité d'identification (42, 52, 62), et une unité d'allocation (43, 53, 63), dans lequel
la première unité d'obtention (41, 51, 61) est configurée pour obtenir un service courant ;
l'unité d'identification (42, 52, 62) est configurée pour identifier un type de service du service courant obtenu par la première unité d'obtention ; et
**caractérisé en ce que**
l'unité d'allocation (43, 53, 63) est configurée pour allouer la bande passante requise dans une bande passante libre d'un groupe de bande passante qui n'est pas occupé par un service d'un autre type de service au service courant, dans lequel l'autre type de service désigne un type de service qui est différent du type de service du service courant, chaque groupe de bande passante est alloué uniquement à des services d'un même type de service, la ressource de bande passante comprend N groupes de bande passante avec la même bande passante en fréquence, et la bande passante du groupe de bande passante est le plus petit commun multiple de la bande passante requise par les types de services qui doivent être traités.

7. Appareil selon la revendication 6, dans lequel l'appareil comprend en outre :
une seconde unité d'obtention (44) configurée pour obtenir la bande passante requise par les types de services qui doivent être traités ;
une unité de calcul (45) configurée pour calculer le plus petit commun multiple de la bande passante qui est requise par les types de services qui doivent être traités et obtenue par la seconde unité d'obtention ; et
une unité de groupage (46) configurée pour grouper la ressource de bande passante en fonction du plus petit commun multiple pour obtenir les N groupes de bande passante avec la même bande passante, dans lequel la bande passante du groupe de bande passante est le plus petit commun multiple.

8. Appareil selon la revendication 6 ou 7, dans lequel l'unité d'allocation (53) comprend
une première unité de détermination (531) configurée pour déterminer si une bande passante libre existe dans un groupe de bande passante dont une certaine bande passante est occupée par un service du type de service ;
une première sous-unité d'allocation (532) configurée pour, lorsqu'un résultat de la détermination par la première unité de détermination est oui, allouer la bande passante requise dans la bande passante libre du groupe de bande passante dont une certaine bande passante est occupée par le service du type de service au service courant ; et
une deuxième sous-unité d'allocation (533) configurée pour, lorsque le résultat de la détermination par la première unité de détermination est non, allouer la bande passante requise dans un groupe de bande passante inoccupé au service courant.

9. Appareil selon la revendication 6 ou 7, dans lequel l'unité d'allocation (63) comprend
une seconde unité de détermination (631) configurée pour déterminer si un groupe de bande passante inoccupé existe dans la ressource de bande passante ;
une troisième sous-unité d'allocation (632) configurée pour, lorsqu'un résultat de la détermination par la seconde unité de détermination est oui, allouer la bande passante requise dans un groupe de bande passante parmi les groupes de bande passante inoccupés au service courant ; et
une quatrième sous-unité d'allocation (633) configurée pour, lorsque le résultat de la détermination par la seconde unité de détermination est non, allouer la bande passante requise dans la bande passante libre d'un groupe de bande passante dont une certaine bande passante est occupée par un service du type de service au service courant.

10. Appareil selon la revendication 9, dans lequel, lorsqu'une pluralité de groupes de bande passante dont une certaine bande passante est occupée par le service du type de service existent, la quatrième sous-unité d'allocation (633) est en outre configurée pour sélectionner un groupe de bande passante dans lequel une bande passante libre existe parmi la pluralité de groupes de bande passante dont une certaine bande passante est occupée par le service du type de service, et allouer la bande passante requise dans la bande passante libre d'un groupe de bande passante du groupe de bande passante sélectionné au service courant.
